# EUROPÄISCHE PATENTSCHRIFT

(11) **EP 0 563 766 B1**
(45) Veröffentlichungstag und Bekanntmachung des Hinweises auf die Patenterteilung: **07.02.1996**
(21) Anmeldenummer: 93104812.8
(22) Anmeldetag: 24.03.1993
(51) Int. Cl.: B23Q 1/50, B23Q 27/00

(54) **Werkzeugspindel, insbesondere Bohrspindel**
Tool spindle, in particular boring spindle
Broche d'outil, en particulier broche de perçage

(30) Priorität: 02.04.1992 DE 4210898
(43) Veröffentlichungstag der Anmeldung: 06.10.1993
(73) Patentinhaber: Grob-Werke GmbH & Co. KG, D-87719 Mindelheim (DE)
(72) Erfinder: Rehm, Karl, W-8948 Mindelheim (DE); Grob, Markus, W-8938 Bad Wörishofen (DE)
(74) Vertreter: Pfister, Helmut, Dipl.-Ing.

(56) Entgegenhaltungen:
- WO-A-88/08346
- FR-A- 1 474 770
- US-A- 3 494 388
- US-A- 3 593 603

## Beschreibung

Die Erfindung betrifft eine Werkzeugspindel, insbesondere eine Bohrspindel zum Bohren von Bohrungen mit elliptischem Querschnitt.

In dem Dokument US-A-3.593.603 ist eine Werkstückspindel beschrieben, die eine elliptische Bahn beschreibt. Im Inneren einer drehbaren Hülse ist exzentrisch eine Welle gelagert, die als Werkstückträger dient. Die Hülse und die Welle können mit gleicher Drehzahl und gegenläufig angetrieben werden. Die Drehachsen der Hülse und der Welle verlaufen parallel, jedoch mit Abstand zueinander.

Um bei der bekannten Vorrichtung die Welle, die umläuft, ihrerseits antreiben zu können, ist eine Kardanwelle vorgesehen. Bei dem bekannten Vorschlag ist nicht gezeigt, wie die einzelnen Bauteile konstruktiv auszubilden wären.

Der Erfindung liegt die Aufgabe zugrunde, eine Werkzeugspindel zu schaffen, mit der es möglich ist, exakte elliptische Bohrungen zu erzeugen. Die erfindungsgemäße Werkzeugspindel soll dabei in erster Linie als Bohrspindel dienen. Es soll aber auch möglich sein, die gleiche Werkzeugspindel bzw. mit nur geringfügigen Anpassungen, beispielsweise als Träger von Schleifwerkzeugen oder von anderen Werkzeugen zur Bearbeitung von Bohrungen mit elliptischem Querschnitt, zu benutzen.

Die Aufgabe gemäß der Erfindung wird durch die Werkzeugspindel gemäß dem Hauptanspruch gelöst.

Der wesentliche Vorteil der Erfindung besteht im verhältnismäßig einfachen Aufbau, der die elliptische Bewegung ergibt.

Die erfindungsgemäße Anordnung hat einen Aufbau ähnlich wie ein Planetengetriebe. Sie erfüllt die wesentlichen Bedingungen der Erfindung, die darin bestehen, daß die Welle und die Hülse gegenläufig mit gleicher Drehzahl angetrieben sind und daß die Welle exzentrisch in der Hülse gelagert ist. Die Gegenläufigkeit wird durch das Zusammenwirken der umlaufenden Getriebewelle mit dem Zentralrad erhalten, wobei die Drehrichtung der Getriebewelle der Drehrichtung der Hülse entspricht. Bei der Einwirkung auf das Zahnrad auf der Welle wird dieses jedoch gegenläufig angetrieben. Durch entsprechende Bemessung der Zähnezahl der verschiedenen zusammenwirkenden Zahnräder läßt sich leicht erreichen, daß eine exakte, gleichförmige Gegenbewegung der Welle bezüglich der Hülse erhalten wird. Der erfindungsgemäße Vorschlag löst auch das Problem des Antriebs der exzentrisch in der Hülse gelagerten Welle. Bei geeigneter Anordnung läßt sich leicht erreichen, daß die Getriebewellen auch um die Achse der Welle umlaufen.

Insbesondere schlägt die Erfindung vor, daß im Getriebegehäuse zwei Getriebewellen mit je einem Zahnradpaar gelagert sind, wobei die Mittelsenkrechte auf der Verbindungslinie der beiden Getriebewellenachsen die Achsen der Hülse und der Welle schneidet. Eine solche Anordnung erfüllt alle erforderlichen geometrischen Bedingungen.

Dabei ist es auch möglich, daß die Achsen der Getriebewellen bezüglich der Hülsenachse um 180° versetzt angeordnet sind, so daß im wesentlichen nur Drehmomente, jedoch keine anderen Kräfte zu übertragen sind.

Bei einer bewährten Ausführungsform der Erfindung ist das umlaufende Getriebegehäuse mit einem halsartigen Ansatz versehen, der die Lagerung für die Welle des stillstehenden Zentralrades aufnimmt, wobei diese Zentralradwelle an ihrem, dem Zentralrad gegenüberliegenden Ende fixiert ist. Dabei ist es günstig, wenn diese Fixierung einstellbar ist. Dadurch läßt sich die Ausrichtung der Halbachsen der angestrebten Ellipse bestimmen. Es ist also nicht unbedingt notwendig, das Werkstück so anzuordnen, daß die zu fertigende Ellipse die gewünschte Ausrichtung bezüglich des Werkstücks hat. Es ist auch möglich, die Werkzeugspindel allein sinngemäß auszurichten.

Günstig ist es, wenn auf den halsartigen Ansatz eine Antriebsscheibe aufgesetzt ist. Über diese Antriebsscheibe wird die Drehbewegung in die Hülse und von hier aus in die Welle eingeleitet.

Nach einem weiteren Merkmal der Erfindung ist das Gehäuse zweiteilig gestaltet. Ein erster rohrförmiger Teil ist dem Werkzeug zugeordnet und nimmt vorzugsweise die Lagerungen der Hülse und der Welle auf. Ein zweiter gehäuseförmiger Teil umschließt das umlaufende Getriebegehäuse.

Vorstehend ist die Erfindung im Hinblick auf eine Werkzeugspindel beschrieben, wobei das Werkzeug, das von der Welle getragen wird, vorzugsweise dazu bestimmt ist, eine Bohrung zu fertigen bzw. zu bearbeiten.

In der Zeichnung ist ein Ausführungsbeispiel der Erfindung schematisch dargestellt. Es zeigen:
- Fig. 1: eine Schnittdarstellung durch die erfindungsgemäße Werkzeugspindel,
- Fig. 2, Fig. 3 und Fig. 4: den vorderen, den mittleren und den hinteren Teil der Werkzeugspindel gemäß Fig. 1 in einem größeren Maßstab und
- Fig. 5: eine schematische Ansicht des umlaufenden Getriebegehäuses.

Bei der gezeigten Werkzeugspindel ist ein äußeres Gehäuse 1 vorgesehen, das aus den Teilen 31 und 32 besteht. Diese beiden Teile sind beispielsweise durch Schrauben 22 fest miteinander verbunden. Der Teil 32 ist Teil eines größeren Gehäuses, mit dem die erfindungsgemäße Werkzeugspindel mit einer Werkzeugmaschine verbunden ist.

Der Teil 31 besitzt eine etwa rohrförmige Gestalt und nimmt im wesentlichen die Hülse 2 auf, während der Teil 32 das umlaufende Getriebegehäuse 7 umschließt.

Die Hülse 2 ist durch die Radiallager 23 und 24 und durch die Axiallager 25 im Gehäuse 1 gehalten. Die Hülsenachse ist mit 12 bezeichnet.

Auf die Hülse 2 ist durch Schrauben 27 das umlaufende Getriebegehäuse 7 aufgesetzt. Dieses Getriebegehäuse ist durch den halsartigen Ansatz 18 verschlossen. In dem umlaufenden Getriebegehäuse 7 sind zwei Getriebewellen 4 und 5 frei drehbar gelagert. Jede der Getriebewellen 4 und 5 besitzt ein Zahnradpaar mit den Zahnrädern 8 und 9, die starr auf der Getriebewelle 4 bzw. 5 gelagert sind.

Jedes Zahnrad 8 der Getriebewellen 4 und 5 kämmt in einem Zentralrad 6, das in einer Lagerung 19 im halsartigen Ansatz 18 abgestützt ist. Diese Lagerung 19 besteht im wesentlichen aus den beiden Wälzlagern 28 und 29. Die Achse 16 des Zentralrades 6 verläuft koaxial zur Hülsenachse 12. Das Ende 30 der Welle 26 des Zentralrades 6 ist unverdrehbar am Teil 32 des Gehäuses 1 fixiert. Diese Fixierung kann jedoch, wenn gewünscht, gelöst werden, um die Ausrichtung der Halbachsen der zu fertigenden Ellipse um die Achsen 12 bzw. 13 zu verdrehen.

Die Achse 13 ist die Achse der Welle 3, die im Inneren der Hülse 2, und zwar exzentrisch zur Achse 12 verläuft.

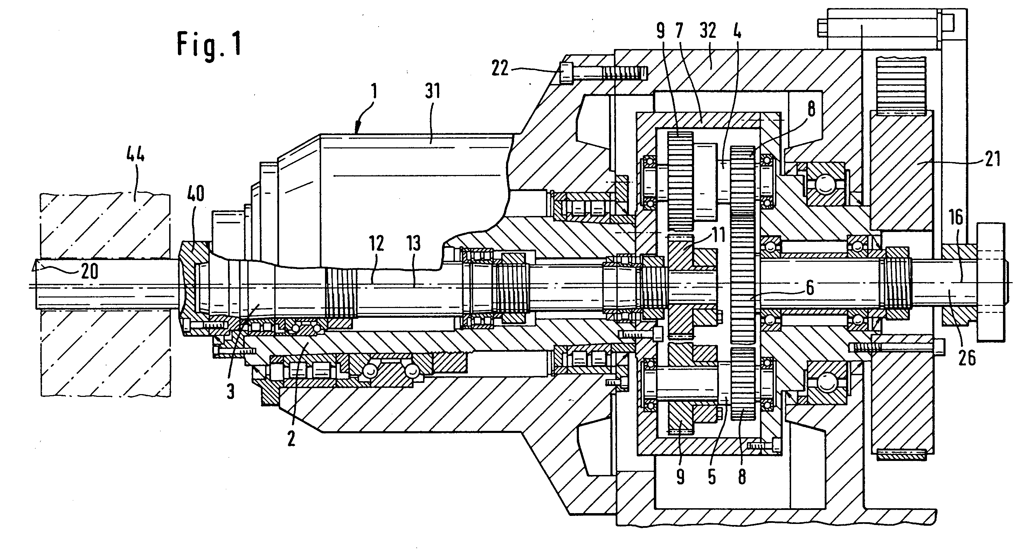

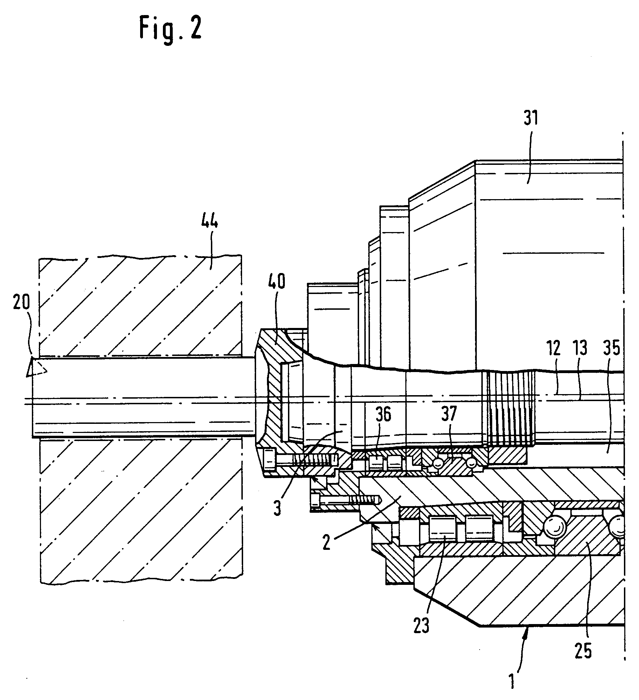

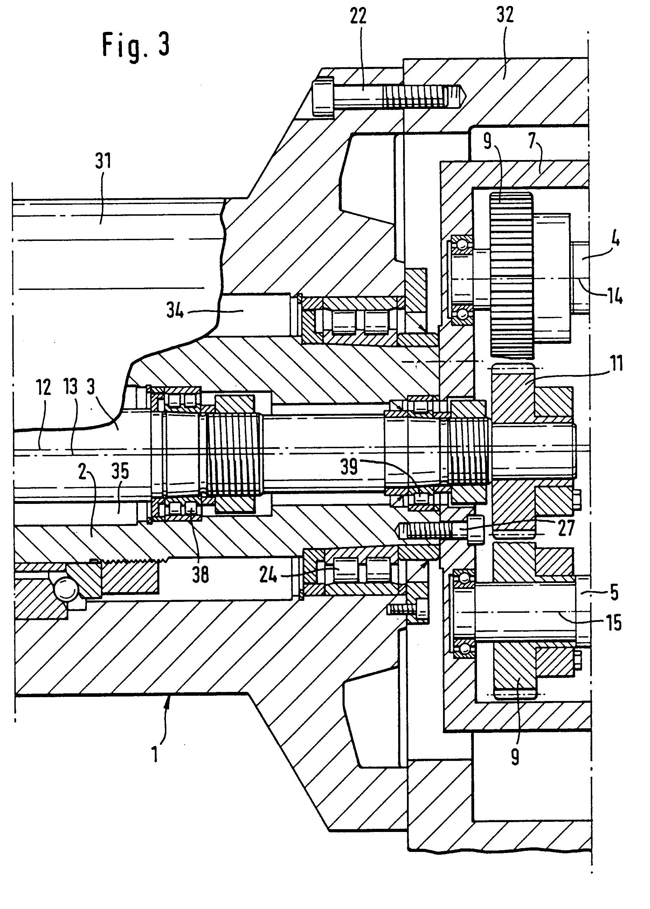

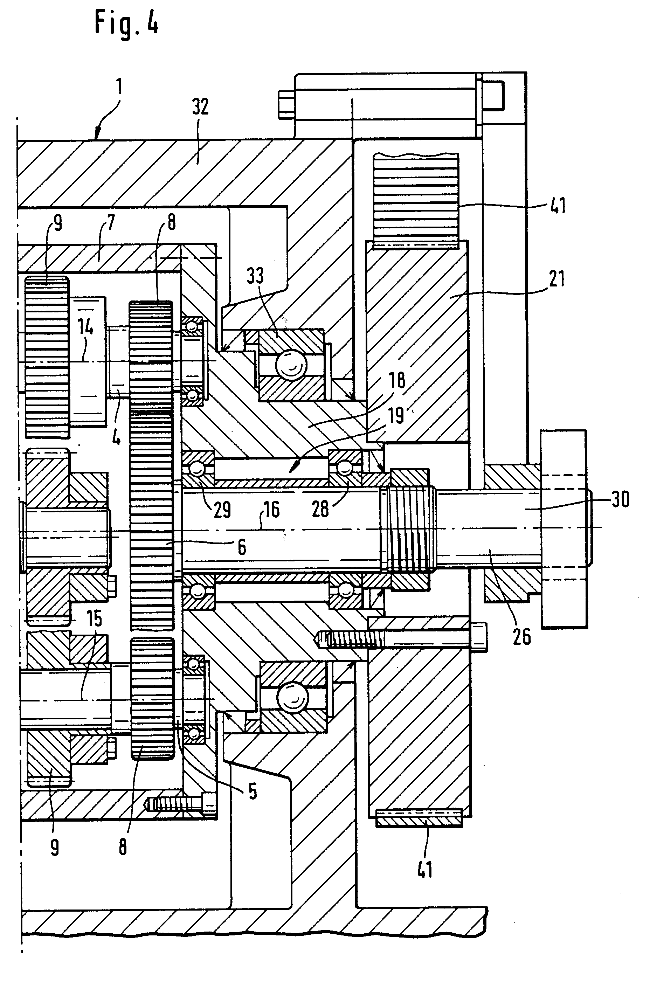

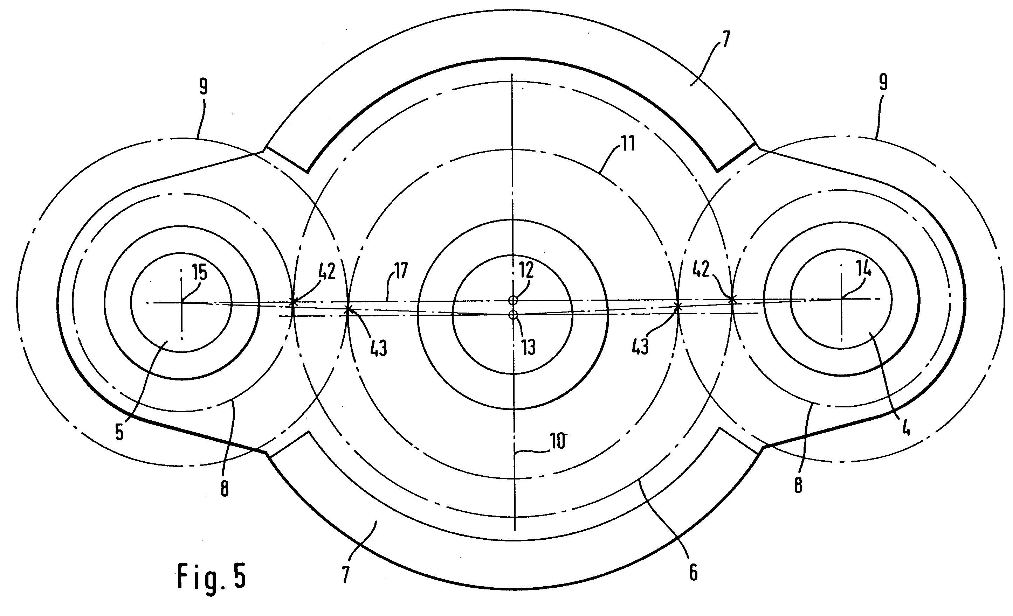

Es wird bemerkt, daß in den zeichnerischen Darstellungen der Fig. 1 bis 4 sowohl die Getriebewellen 4 und 5 als auch die exzentrische Versetzung der Welle 13 gegenüber der Welle 12 in der Bildebene gezeichnet ist. Die Fig. 5 macht jedoch deutlich, daß dies nur für die Zwecke der besseren Darstellung gilt. Beim praktischen Ausführungsbeispiel schneiden sich die Ebene, der die Achsen 12 und 13 angehören und die Ebene, der die Achsen der beiden Getriebewellen 4 und 5 angehören jeweils in einem rechten Winkel.

Der halsartige Ansatz 18 stützt sich seinerseits noch über das Lager 33 im Gehäuseteil 32 ab.

Während die Hülse 2 in einer Bohrung 34 des Gehäuses 1 angeordnet ist, ist die Welle 3 in einer Bohrung 35 der Hülse 2 untergebracht. Dieser Bohrung 35 ist die Achse 13 zugeordnet. Die Elemente zur Lagerung der Welle 3 in der Hülse 2 sind mit 36 bis 39 bezeichnet. Die Lager 36, 38 und 39 sind dabei Radiallager, das Lager 37 nimmt die axialen Kräfte auf.

Die Welle 3 besitzt ein Halteelement 40, das das spanabhebende Werkzeug 20 trägt. Das Werkstück ist mit 44 bezeichnet. An dem dem Werkzeug 20 abgewandten Ende ist das Zahnrad 11 starr mit der Welle verbunden. Dieses Zahnrad 11 kämmt in den beiden Zahnrädern 9 der Getriebewellen 4 und 5.

Für den Antrieb der Hülse 2 ist eine Antriebsscheibe 21 vorgesehen. Diese Antriebsscheibe 21 kann beispielsweise eine Zahnriemenscheibe für den Zahnriemen 41 sein. Für den Antrieb der Hülse 2 können aber auch andere bekannte Mittel, wie Zahnräder, Keilriemen oder dergleichen angewandt werden.

Im gezeigten Ausführungsbeispiel leitet sich der Antrieb der Welle 3 vom Antrieb der Hülse 2 ab. Die mit der Hülse 2 umlaufenden Zahnräder 8 kämmen im Zentralrad 6 die zugehörigen Achsen 14 und 15 und laufen dabei mit der Hülse in gleicher Richtung um, und auch die Zahnräder 8 und 9 auf den Getriebewellen 4 und 5 haben die gleiche Drehrichtung wie die Hülse 2, da sie sich auf dem Zentralrad 6 abwälzen. Beim Zusammenwirken der Zahnräder 9 mit dem Zahnrad 11 kommt jedoch eine gegengerichtete Drehbewegung für das Zahnrad 11 zustande, so daß sich die Welle 3 in umgekehrter Richtung dreht.

Die Fig. 5 zeigt eine vergrößerte Darstellung einer schematischen Ansicht des Inneren des umlaufenden Getriebegehäuses, wobei die verschiedenen Zahnräder nur mit ihren Teilkreisen bzw. Wälzkreisen gezeichnet sind.

Die Wälzpunkte zwischen dem Zentralrad 6 und den Zahnrädern 8 sind mit 42 und die Wälzpunkte zwischen den Zahnrädern 9 und dem Zahnrad 11 auf der Welle 3 sind mit 43 bezeichnet.

Im gezeigten Ausführungsbeispiel liegen die Achsen 14 und 15 bezüglich der Achse 12 der Hülse 2 um 180° gegenüber. Die Wellenachse 13 ist um einen bestimmten Betrag zur Hülsenachse 12 versetzt. Beim Umlauf der Getriebewellenachsen 14 und 15 wirken die Zahnräder 8 mit dem Zentralrad 6 zusammen und die Zahnräder 9 mit dem Zahnrad 11 der Welle 3. Die Mittelsenkrechte 10 auf der Verbindungslinie 17 der Achsen 14 und 15 schneidet die Achsen 12 und 13.

## Patentansprüche

1. Werkzeugspindel, insbesondere Bohrspindel zum Bohren von Bohrungen mit elliptischem Querschnitt, wobei in einem Gehäuse (1) eine Hülse (2) gelagert ist, die ihrerseits wiederum eine Welle (3) als Werkzeugträger aufnimmt, wobei die Hülse (2) und die Welle (3) mit gleicher Drehzahl, jedoch gegenläufig angetrieben sind und die Drehachsen (12,13) der Hülse (2) und der Welle (3) zueinander parallel, jedoch mit einem Abstand zueinander verlaufen, wobei ferner mit der angetriebenen Hülse (2) ein Getriebegehäuse (7) umläuft, und im Getriebegehäuse (7) eine Getriebewelle (4,5) mit zwei Zahnrädern (8,9) drehbar und im wesentlichen achsparallel zur Hülsen- und Wellenachse (12,13) gelagert ist, wobei das eine Zahnrad (8) der Getriebewelle (4,5) mit einem stillstehenden Zentralrad (6) kämmt, dessen Achse koaxial zur Hülsenachse (12) ausgerichtet ist, während das andere Zahnrad (9) der Getriebewelle (4,5) auf ein, auf der als Werkzeugträger dienenden Welle (3) angeordnetes und mit diesem koaxial umlaufendes Zahnrad (11) einwirkt.

2. Werkzeugspindel nach Anspruch 1, **dadurch gekennzeichnet, daß** im Getriebegehäuse (7) zwei Getriebewellen (4,5) mit je einem Zahnradpaar (8,9) gelagert sind, wobei die Mittelsenkrechte (10) auf der Verbindungslinie (17) der beiden Getriebewellenachsen (14,15) die Achsen (12,13) der Hülse (2) und der Welle (3) schneidet.

3. Werkzeugspindel nach Anspruch 2, **dadurch gekennzeichnet, daß** die Achsen (14,15) der Getriebewellen (4,5) bezüglich der Hülsenachse (12) um 180° versetzt angeordnet sind.

4. Werkzeugspindel nach einem oder mehreren der vorhergehenden Ansprüche, **dadurch gekennzeichnet, daß** das umlaufende Getriebegehäuse (7) mit einem halsartigen Ansatz (18) versehen ist, der die Lagerung (19) für die Welle (26) des stillstehenden Zentralrades (6) aufnimmt, wobei die Zentralradwelle (26) an ihrem, dem Zentralrad gegenüberliegenden Ende fixiert ist.

5. Werkzeugspindel nach einem oder mehreren der vorhergehenden Ansprüche, **dadurch gekennzeichnet, daß** auf den halsartigen Ansatz (18) eine Antriebsscheibe (21) aufgesetzt ist.

6. Werkzeugspindel nach einem oder mehreren der vorhergehenden Ansprüche, **dadurch gekennzeichnet, daß** das Gehäuse (1) zweiteilig gestaltet ist, und zwar mit einem ersten, rohrförmigen, dem Werkzeug (20) zugewandten Teil (31) und einem zweiten gehäuseartigen Teil (32), der das umlaufende Getriebegehäuse (7) umschließt.

## Claims

1. Toolspindle, in particular a drill spindle for drilling holes of elliptic section, with a sleeve (2) lodged in a housing (1), said sleeve supporting a shaft (3) as tool carrier, the sleeve (2) and the shaft (3) being driven at the same speed but in opposite directions and the rotary axes (12,13) of the sleeve (2) and the shaft (3) being arranged parallel to each other but at a distance from each other, and with a gear housing (7) turning with the driven sleeve (2), a gear shaft (4,5) with two gears (8,9) lodged in the gear housing (7) in a rotatable manner and with an axis essentially parallel to the axes of the sleeve and the shaft (12;13), with one of the gears (8) of the gear shaft (4) meshing with a stationary central gear (9), its axis being coaxial with the axis of the sleeve (12), with the other gear of the gear shaft (4) acting on a gear (11) arranged on the shaft (3) serving as tool carrier and rotating coaxially with said shaft.

2. Toolspindle according to claim 1, characterized in that two gear shafts (4,5) each having one pair of gears (8,9) are lodged in the gear housing (7), with the mean perpendicular (10) on the connecting line (17) between the two axes of the gear shafts (14,15) intersecting the axes (12,13) of the sleeve (2) and the shaft (3).

3. Toolspindle according to claim 2, characterized in that the axes (14,15) of the gear shafts (4,5) are arranged at an angle to the sleeve axis (12) which is offset 180°.

4. Toolspindle according to one or several of the preceding claims, characterized in that the surrounding gear housing (7) has a neck-like projection (18), supporting the bearing (19) for the shaft (26) of the stationary central gear (6), the central gear shaft (26) being fixed at the end opposite the central gear.

5. Toolspindle according to one or several of the preceding claims, characterized in that a driving disc is attached to the neck-like projection (18).

6. Toolspindle according to one or several of the preceding claims, characterized in that the housing (1) is designed in two parts, namely a first, tubular part (31) facing the tool and a second case-like part (32) enclosing the surrounding gear housing (7).

## Revendications

1. Barre d'outil, particulièrement barre d'alésage pour percer des alésages à coupe transversale elliptique, ayant un axe (3) de porte-outil monté dans une douille (2), dans un boîtier (1), ainsi que la douille (2) et l'axe (3) sont commandés avec le même nombre de tours mais en contresens et que les axes de rotation (12,13) de la douille (2) et de l'axe (3) sont parallèle mais distants et qu'une boîte de vitesses (7) tourne avec la douille (2), et dans la boîte de vitesses (7) est montée d'une manière tournante et essentiellement parallèle aux axes de rotation (12,13) de la douille (2) et de l'axe (3) une barre de transmission (4,5) avec deux roues d'engrenage (8,9), dont une roue d'engrenage (8) engrène avec une roue d'engrenage centrale immobile (6) dont l'axe est coaxial à l'axe de rotation (12) de la douille, pendant que l'autre roue d'engrenage (9) agit sur une roue d'engrenage (11) fixée d'une manière coaxiale sur l'axe (3) utilisé comme porte outil.

2. Barre d'outil suivant la revendication 1, caractérisée en ce que deux barres de transmission (4,5) avec deux roues d'engrenage (8,9) sur chacune sont montées dans la boîte de vitesses (7) ainsi que la perpendiculaire (10) de la ligne de jonction (17) entre les axes (14,15) des barres de transmission coupe les axes (12,13) de la douille (2) et de l'axe (3).

3. Barre d'outil suivant la revendication 2, caractérisée en ce que les axes (14,15) des barres de transmission (4,5) sont déplacées par rapport à l'axe (12) de la douille de 180°.

4. Barre d'outil suivant l'une ou plusieurs des revendications précédentes, caractérisée en ce que la boîte de vitesses (7) est munie d'une rallonge (18) recevant le roulement (19) de l'axe (26) de la roue centrale (6) immobile, ainsi que l'axe (26) de la roue centrale est fixé à son bout opposé de la roue centrale.

5. Barre d'outil suivant l'une ou plusieurs des revendications précédentes, caractérisée en ce que sur la rallonge (18) est mis un disque de transmission (21).

6. Barre d'outil suivant l'une ou plusieurs des revendications précédentes, caractérisée en ce que le boîtier est réalisé en deux parties avec une première tubulaire (31) tournée vers l'outil (20) et une deuxième en forme de boîtier (32) enfermant la boîte de vitesses tournante.
